(19) Europäisches Patentamt
European Patent Office
Office européen des brevets

(11) Veröffentlichungsnummer: **0 208 111**
**B1**

(12) **EUROPÄISCHE PATENTSCHRIFT**

(45) Veröffentlichungstag der Patentschrift: **24.05.89**

(51) Int. Cl.[4]: **C 07 F 9/21**, A 01 N 57/36, C 07 F 9/24, C 07 F 9/40

(21) Anmeldenummer: **86107157.9**

(22) Anmeldetag: **27.05.86**

(54) **Phosphor-enthaltende Heterocyclen.**

(30) Priorität: **07.06.85 DE 3520388**
**02.11.85 DE 3538894**

(43) Veröffentlichungstag der Anmeldung:
**14.01.87 Patentblatt 87/3**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**DE-B-1 926 565**
**DE-C-1 104 520**
**US-A-2 744 128**
**US-A-3 773 711**

**BULLETIN OF ACADEMY OF SCIENCES OF USSR, Band 29, Nr. 4, Teil 2, April 1980, Seiten 663-668, New York, US; L.Z. NIKONOVA et al.: "Synthesis and isomerization of 2-(3'-chloroalkoxy)-1,3,2,-azathia-,2-(3'-chloroalkoxy)-1,3,2-diaza-,2-(3'chloroalkoxy)-1,3,2-oxathia-, and 2-(3'-chloroalkoxy)-1,3,2-dithiaphospholanes"**

(73) Patentinhaber: **BAYER AG, Konzernverwaltung RP Patentabteilung, D-5090 Leverkusen 1 Bayerwerk (DE)**

(72) Erfinder: **Krüger, Bernd-Wieland, Dr., Sillerstrasse 49, D-5600 Wuppertal 11 (DE)**
Erfinder: **Behrenz, Wolfgang, Dr., Untergründemich 14, D-5063 Overath (DE)**
Erfinder: **Becker, Benedikt, Dr., Metzkausener Strasse 14, D-4020 Mettmann (DE)**
Erfinder: **Homeyer, Bernhard, Dr., Obere Strasse 28, D-5090 Leverkusen 3 (DE)**
Erfinder: **Stendel, Wilhelm, Dr., In den Birken 55, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue substituierte Phosphor enthaltende Heterocyclen, 1,3,2-Oxathiaphosphorinan-2-sulfide und 1,3,2-Oxathiaphosphepan-2-sulfide, mehrere Verfahren zur ihrer Herstellung und ihre Verwendung als Schädlingsbekämpfungsmittel, vorzugsweise als Arthropodizide, insbesondere als Insektizide und Akarizide und Nematizide.

Es ist bekannt, daß bestimmte P-Heterocyclen, wie z.B. 5-gliedrige cyclische Thiophosphorsäureamid-diester [M. Eto u.a., J. Pesticide Sci., 3, 161 (1978)] oder Dithiophosphorsäure-O,S-ester (vgl. DE-PS 1 104 520) zur Schädlingsbekämpfung verwendet werden können. Weiterhin sind bestimmte aus der US-PS 2 744 128 bestimmte, durch Alkenyloxy-substituierte Phosphor-enthaltende Heterocyclen bekannt geworden, für welche u.a. eine Verwendbarkeit angegeben wird.

Die insektizide und akarizide Wirkung der bekannten Verbindungen ist jedoch, insbesondere bei niedrigen Wirkstoffkonzentrationen und Aufwandmengen, nicht immer zufriedenstellend.

Es wurden neue P-Heterocyclen der allgemeinen Formel (I)

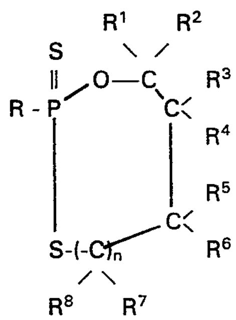

(I)

gefunden

in welcher

R für $C_1$-$C_4$-Alkyl, $C_1$-$C_6$-Alkoxy, $C_1$-$C_4$-Alkylamino oder Methyl-($C_1$-$C_4$-alkyl)-amino steht,

$R^1$ bis $R^8$ gleich oder verschieden sind und für Wasserstoff oder gegebenenfalls durch Chlor oder Brom substituiertes $C_1$-$C_4$-Alkyl stehen, und

n für null oder eins steht.

Man erhält die neuen Verbindungen der allgemeinen Formel (I), wenn man

a) Halogenide der allgemeinen Formel (II)

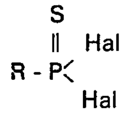

(II)

in welcher

Hal für Halogen, vorzugsweise für Chlor oder Brom, insbesondere für Chlor steht und

R die oben angegebene Bedeutung hat,

mit Verbindungen der allgemeinen Formel (III)

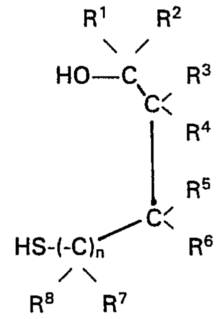

(III)

in welcher

$R^1$ bis $R^8$ und n die obengenannte Bedeutung haben,

gegebenenfalls in Gegenwart eines Säureakzeptors und gegebenenfalls in Gegenwart von Verdünnungsmitteln umsetzt oder

b) Dithioanhydride der allgemeinen Formel (IV)

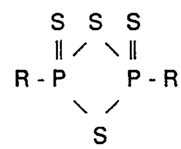

(IV)

in welcher

R für $C_1$-$C_4$-Alkyl steht,

mit Alkoholen der allgemeinen Formel (V)

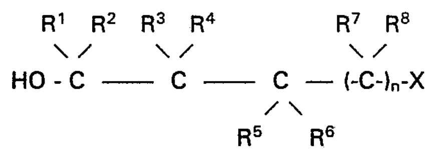

(V)

in welcher

$R^1$ bis $R^8$ und n die obengenannte Bedeutung haben und

X für Halogen, vorzugsweise für Chlor oder Brom, insbesondere für Chlor steht oder für einen Sulfonatrest der allgemeinen Formel (VI)

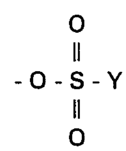

(VI)

steht, in welcher

Y für gegebenenfalls substituiertes Alkyl oder Aryl steht,

gegebenenfalls unter Verwendung eines Verdünnungsmittels und gegebenenfalls unter Zugabe eines Säureakzeptors, umsetzt oder

c) zunächst (analog Methode a) Thiophosphorsäuretrichlorid ($PSCl_3$) mit Verbindungen der allgemeinen Formel (III) zu 2-Chlor-1,3,2-oxathia-P-cyclen der allgemeinen Formel (VII)

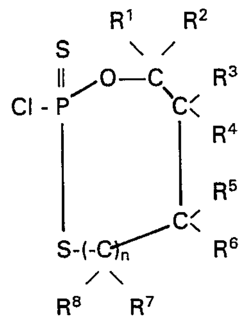

(VII)

in welcher

$R^1$ bis $R^8$ und n die obengenannte Bedeutung haben umsetzt und, gegebenenfalls nach ihrer Isolierung, dann in einem zweiten Reaktionsschritt mit einer Verbindung der allgemeinen Formel (VIII)

$$R - M \qquad \text{(VIII)}$$

in welcher

R die obengenannte Bedeutung, ausgenommen $C_1$-$C_4$-Alkyl, hat, und

M für Wasserstoff, ein Äquivalent eines Alkali- oder Erdalkalimetallions (wie Natrium, Kalium oder Calcium) oder für ein Ammoniumion

steht, gegebenenfalls in Gegenwart von Säureakzeptoren und gegebenenfalls in Gegenwart von Verdünnungsmitteln umsetzt.

Die neuen P-Heterocyclen der allgemeinen Formel (I) zeichnen sich durch eine hohe Wirksamkeit gegen tierische Schädlinge, vorzugsweise gegen Arthropoden, insbesondere durch eine hohe, insektizide und akarizide sowie eine nematizide Wirksamkeit aus. Sie können auch in synergistischen Mischungen mit anderen Schädlingsbekämpfungsmitteln verwendet werden.

Überraschenderweise zeigen die erfindungsgemässen Verbindungen der allgemeinen Formel (I) eine erheblich höhere insektizide und akarizide sowie nematizide Wirkung als entsprechende bekannte Verbindungen.

Die in den allgemeinen Formeln angegebenen Reste haben vorzugsweise die folgende Bedeutung:

Die Alkylgruppe im Alkylamino-Rest R sowie im Methylalkylamino-Rest R ist geradkettig oder verzweigt und enthält 1 bis 4 Kohlenstoffatome. Beispielhaft seien Methyl, Ethyl, n- und i-Propyl genannt.

Als Alkyl R steht geradkettiges oder verzweigtes Alkyl mit 1 bis 4 Kohlenstoffatomen. Beispielhaft seien gegebenenfalls substituiertes Methyl, Ethyl, n- und i-Propyl, n-, i- und t-Butyl, genannt.

Als Alkoxy R steht geradkettiges oder verzweigtes Alkoxy mit 1 bis 4 Kohlenstoffatomen. Beispielhaft seien gegebenenfalls substituiertes Methoxy, Ethoxy, n- und i-Propoxy und n-, i- und t-Butoxy genannt.

Im gegebenenfalls durch Chlor oder Brom substituierten Alkyl $R^1$ bis $R^8$ bedeutet Alkyl geradkettiges oder verzweigtes Alkyl mit 1 bis 4 Kohlenstoffatomen. Beispielhaft seien gegebenenfalls durch Chlor oder Brom substituiertes Methyl, Ethyl, n- und i-Propyl, n-, i- und t-Butyl, genannt. wobei Chlormethyl und Brommethyl besonders hervorgehoben sein sollen.

Als gegebenenfalls substituiertes Alkyl Y steht vorzugsweise gegebenenfalls durch Halogen (Fluor, Chlor und/oder Brom, vorzugsweise Fluor) substituiertes Alkyl mit 1 bis 4 Kohlenstoffatomen, wobei Methyl und Trifluormethyl beispielhaft genannt seien.

Als gegebenenfalls substituiertes Aryl Y steht vorzugsweise gegebenenfalls durch Alkyl mit 1 bis 4 Kohlenstoffatomen substituiertes Phenyl, wobei 4-Methylphenyl beispielhaft genannt sei.

Halogen bedeutet überall, wo nicht anders angegeben, Fluor, Chlor, Brom und Jod, vorzugsweise Fluor, Chlor und Brom, insbesondere Chlor und Brom.

Als bevorzugt werden die Verbindungen der allgemeinen Formel (I) hervorgehoben, in welcher

R für Methyl, Ethyl, Methylamino, Dimethylamino oder Methoxy steht,

$R^1$ bis $R^8$ gleich oder verschieden sind und für Wasserstoff, Methyl, Ethyl oder n- und i-Propyl stehen, und

n für null oder eins steht.

Die Verbindungen der Formel (I) enthalten ein oder mehrere Asymmetriezentren und können somit in Form von Diastereomeren oder Diastereomerengemischen vorliegen.

Verwendet man beispielsweise Methanthiophosphonsäuredichlorid und 3-Hydroxy-propylmercaptan als Ausgangsstoffe für die Verfahrensvariante (a), so kann die Reaktion dieser Verbindungen durch folgendes Formelschema skizziert werden:

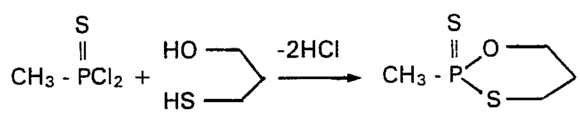


Verwendet man als Ausgangsstoffe für die Verfahrensvariante (b) Ethanthiophosphonsäuredithioanhydrid und 4-Chlorbutanol-1, so kann die Reaktion dieser Verbindungen durch folgendes Formelschema skizziert werden:

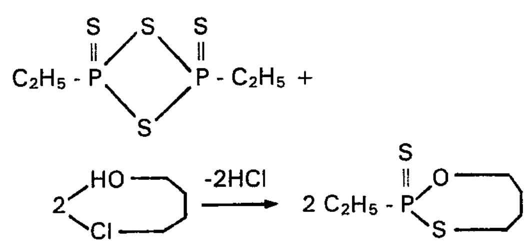


Verwendet man für die Verfahrensvariante (c) Thiophosphorsäuretrichlorid, 3-Hydroxypropyl-mercaptan und Natriummethanolat als Ausgangsstoffe, so kann die zweistufige Reaktion dieser Verbindungen durch folgendes Formelschema skizziert werden:

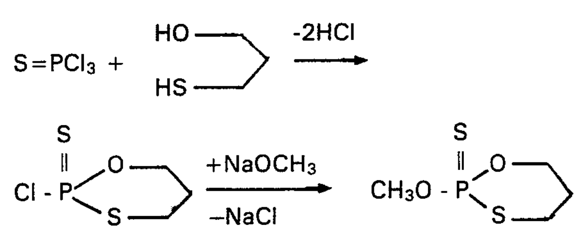

Die als Ausgangsstoffe benötigten Verbindungen der allgemeinen Formel (II), (III), (IV), (V), (VI) und (VIII) sind allgemein bekannte Verbindungen der organischen Chemie oder können nach bekannten Verfahren und Methoden hergestellt werden.

Die als Ausgangsstoffe benötigten Verbindungen der Formel (VII) sind neu. Die Herstellung geschieht, wie unter Verfahren (c) beschrieben (vergl. auch Herstellungsbeispiele).

Als Beispiele für die Verbindungen der allgemeinen Formel (VII) seien genannt:

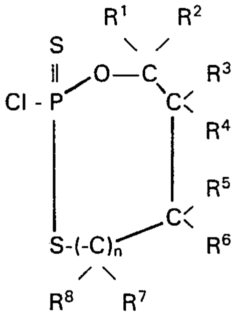

(VII)

*1. n steht für null*

| $R^1$ | $R^2$ | $R^3$ | $R^4$ | $R^5$ | $R^6$ |
|---|---|---|---|---|---|
| H | H | H | H | H | H |
| $CH_3$ | H | H | H | H | H |
| H | H | $CH_3$ | H | H | H |
| H | H | H | H | $CH_3$ | H |
| $C_2H_5$ | H | H | H | H | H |
| H | H | $C_2H_5$ | H | H | H |
| H | H | H | H | $C_2H_5$ | H |
| n-$C_3H_7$ | H | H | H | H | H |
| H | H | n-$C_3H_7$ | H | H | H |
| H | H | H | H | n-$C_3H_7$ | H |
| i-$C_3H_7$ | H | H | H | H | H |
| H | H | i-$C_3H_7$ | H | H | H |
| H | H | H | H | i-$C_3H_7$ | H |
| t-$C_4H_9$ | H | H | H | H | H |
| H | H | t-$C_4H_9$ | H | H | H |
| H | H | H | H | t-$C_4H_9$ | H |
| $CH_3$ | $CH_3$ | H | H | H | H |
| $CH_3$ | $C_2H_5$ | H | H | H | H |
| $CH_3$ | n-$C_3H_7$ | H | H | H | H |
| $CH_3$ | i-$C_3H_7$ | H | H | H | H |
| $C_2H_5$ | $C_2H_5$ | H | H | H | H |
| $C_2H_5$ | n-$C_3H_7$ | H | H | H | H |
| $C_2H_5$ | i-$C_3H_7$ | H | H | H | H |
| n-$C_3H_7$ | i-$C_3H_7$ | H | H | H | H |
| H | H | $CH_3$ | $CH_3$ | H | H |
| H | H | $CH_3$ | $C_2H_5$ | H | H |
| H | H | $CH_3$ | $C_3H_7$ | H | H |
| H | H | $CH_3$ | i-$C_3H_7$ | H | H |
| H | H | $C_2H_5$ | $C_2H_5$ | H | H |
| H | H | $C_2H_5$ | $C_3H_7$ | H | H |
| H | H | $C_2H_5$ | i-$C_3H_7$ | H | H |
| H | H | $C_3H_7$ | $C_3H_7$ | H | H |
| H | H | $C_3H_7$ | i-$C_3H_7$ | H | H |
| $CH_3$ | H | $CH_3$ | $CH_3$ | H | H |
| $CH_3$ | H | $CH_3$ | $C_2H_5$ | H | H |
| $CH_3$ | H | $CH_3$ | $C_3H_7$ | H | H |
| $CH_3$ | H | $CH_3$ | i-$C_3H_7$ | H | H |
| $CH_3$ | H | $C_2H_5$ | $C_2H_5$ | H | H |
| $CH_3$ | H | $C_2H_5$ | $C_3H_7$ | H | H |
| $CH_3$ | H | $C_2H_5$ | i-$C_3H_7$ | H | H |
| $CH_3$ | H | $C_3H_7$ | $C_3H_7$ | H | H |
| $CH_3$ | H | $C_3H_7$ | i-$C_3H_7$ | H | H |
| $CH_3$ | $CH_3$ | $CH_3$ | $CH_3$ | H | H |
| $CH_3$ | $CH_3$ | $CH_3$ | $C_2H_5$ | H | H |
| $CH_3$ | $CH_3$ | $CH_3$ | $C_3H_7$ | H | H |
| $CH_3$ | $CH_3$ | $CH_3$ | i-$C_3H_7$ | H | H |
| $CH_3$ | $CH_3$ | $C_2H_5$ | $C_2H_5$ | H | H |

| $R^1$ | $R^2$ | $R^3$ | $R^4$ | $R^5$ | $R^6$ |
|---|---|---|---|---|---|
| $CH_3$ | $CH_3$ | $C_2H_5$ | $C_3H_7$ | H | H |
| $CH_3$ | $CH_3$ | $C_2H_5$ | i-$C_3H_7$ | H | H |
| $CH_3$ | $CH_3$ | $C_3H_7$ | $C_3H_7$ | H | H |
| $CH_3$ | $CH_3$ | $C_3H_7$ | i-$C_3H_7$ | H | H |
| $CH_3$ | $CH_3$ | $CH_3$ | $CH_3$ | $CH_3$ | H |
| $CH_3$ | $CH_3$ | $CH_3$ | $CH_3$ | $C_2H_5$ | H |
| $CH_3$ | $CH_3$ | $CH_3$ | $CH_3$ | $C_3H_7$ | H |
| $CH_3$ | $CH_3$ | $CH_3$ | $CH_3$ | i-$C_3H_7$ | H |
| H | H | H | H | $CH_3$ | $CH_3$ |
| H | H | H | H | $CH_3$ | $C_2H_5$ |
| H | H | H | H | $CH_3$ | $C_3H_7$ |
| H | H | H | H | $CH_3$ | i-$C_3H_7$ |
| $CH_3$ | H | $CH_3$ | $CH_3$ | $CH_3$ | $CH_3$ |
| H | H | $CH_3$ | $CH_3$ | $CH_3$ | H |
| H | H | $CH_3$ | $CH_3$ | $C_2H_5$ | H |
| H | H | $CH_3$ | $CH_3$ | $C_3H_7$ | H |
| H | H | $CH_3$ | $CH_3$ | i-$C_3H_7$ | H |

*2. n steht für eins*

| | | | | | | | |
|---|---|---|---|---|---|---|---|
| H | H | H | H | H | H | H | H |
| $CH_3$ | H | H | H | H | H | H | H |
| H | H | $CH_3$ | H | H | H | H | H |
| H | H | H | H | $CH_3$ | H | H | H |
| $C_2H_5$ | H | H | H | H | H | H | H |
| H | H | $C_2H_5$ | H | H | H | H | H |
| H | H | H | H | $C_2H_5$ | H | H | H |
| n-$C_3H_7$ | H | H | H | H | H | H | H |
| H | H | n-$C_3H_7$ | H | H | H | H | H |
| H | H | H | H | n-$C_3H_7$ | H | H | H |
| i-$C_3H_7$ | H | H | H | H | H | H | H |
| H | H | i-$C_3H_7$ | H | H | H | H | H |
| H | H | H | H | i-$C_3H_7$ | H | H | H |
| t-$C_4H_9$ | H | H | H | H | H | H | H |
| H | H | t-$C_4H_9$ | H | H | H | H | H |
| H | H | H | H | t-$C_4H_9$ | H | H | H |
| $CH_3$ | $CH_3$ | H | H | H | H | H | H |
| $CH_3$ | $C_2H_5$ | H | H | H | H | H | H |
| $CH_3$ | n-$C_3H_7$ | H | H | H | H | H | H |
| $CH_3$ | i-$C_3H_7$ | H | H | H | H | H | H |
| $C_2H_5$ | $C_2H_5$ | H | H | H | H | H | H |
| $C_2H_5$ | n-$C_3H_7$ | H | H | H | H | H | H |
| $C_2H_5$ | i-$C_3H_7$ | H | H | H | H | H | H |
| n-$C_3H_7$ | i-$C_3H_7$ | H | H | H | H | H | H |
| H | H | $CH_3$ | $CH_3$ | H | H | H | H |
| H | H | $CH_3$ | $C_2H_5$ | H | H | H | H |
| H | H | $CH_3$ | $C_3H_7$ | H | H | H | H |
| H | H | $CH_3$ | i-$C_3H_7$ | H | H | H | H |
| H | H | $C_2H_5$ | $C_2H_5$ | H | H | H | H |
| H | H | $C_2H_7$ | $C_3H_7$ | H | H | H | H |
| H | H | $C_2H_5$ | i-$C_3H_7$ | H | H | H | H |
| H | H | $C_3H_7$ | $C_3H_7$ | H | H | H | H |
| H | H | $C_3H_7$ | i-$C_3H_7$ | H | H | H | H |
| $CH_3$ | H | $CH_3$ | $CH_3$ | H | H | H | H |
| $CH_3$ | H | $CH_3$ | $C_2H_5$ | H | H | H | H |
| $CH_3$ | H | $CH_3$ | $C_3H_7$ | H | H | H | H |
| $CH_3$ | H | $CH_3$ | i-$C_3H_7$ | H | H | H | H |
| $CH_3$ | H | $C_2H_5$ | $C_2H_5$ | H | H | H | H |
| $CH_3$ | H | $C_2H_5$ | $C_3H_7$ | H | H | H | H |
| $CH_3$ | H | $C_2H_5$ | i-$C_3H_7$ | H | H | H | H |

| $R^1$ | $R^2$ | $R^3$ | $R^4$ | $R^5$ | $R^6$ | $R^7$ | $R^8$ |
|---|---|---|---|---|---|---|---|
| $CH_3$ | H | $C_3H_7$ | $C_3H_7$ | H | H | H | H |
| $CH_3$ | H | $C_3H_7$ | i-$C_3H_7$ | H | H | H | H |
| $CH_3$ | $CH_3$ | $CH_3$ | $CH_3$ | H | HH | H | |
| $CH_3$ | $CH_3$ | $CH_3$ | $C_2H_5$ | H | H | H | H |
| $CH_3$ | $CH_3$ | $CH_3$ | $CH_3$ | H | H | H | H |
| $CH_3$ | $CH_3$ | $CH_3$ | i-$C_3H_7$ | H | H | H | H |
| $CH_3$ | $CH_3$ | $C_2H_5$ | $C_2H_5$ | H | H | H | H |
| $CH_3$ | $CH_3$ | $C_2H_5$ | $C_3H_7$ | H | H | H | H |
| $CH_3$ | $CH_3$ | $C_2H_5$ | i-$C_3H_7$ | H | H | H | H |
| $CH_3$ | $CH_3$ | $C_3H_7$ | $C_3H_7$ | H | H | H | H |
| $CH_3$ | $CH_3$ | $C_3H_7$ | i-$C_3H_7$ | H | H | H | H |
| $CH_3$ | $CH_3$ | $CH_3$ | $CH_3$ | $CH_3$ | H | H | H |
| $CH_3$ | $CH_3$ | $CH_3$ | $CH_3$ | $C_2H_5$ | H | H | H |
| $CH_3$ | $CH_3$ | $CH_3$ | $CH_3$ | $C_3H_7$ | H | H | H |
| $CH_3$ | $CH_3$ | $CH_3$ | $CH_3$ | i-$C_3H_7$ | H | H | H |
| H | H | H | H | $CH_3$ | $CH_3$ | H | H |
| H | H | H | H | $CH_3$ | $C_2H_5$ | H | H |
| H | H | H | H | $CH_3$ | $C_3H_7$ | H | H |
| H | H | H | H | $CH_3$ | i-$C_3H_7$ | H | H |
| $CH_3$ | H | $CH_3$ | $CH_3$ | $CH_3$ | $CH_3$ | H | H |
| H | H | H | H | H | H | $CH_3$ | $CH_3$ |
| H | H | H | H | H | H | $CH_3$ | $C_2H_5$ |
| H | H | H | H | H | H | $CH_3$ | $C_3H_7$ |
| H | H | H | H | H | H | $CH_3$ | i-$C_3H_7$ |
| H | H | H | H | H | H | $CH_3$ | H |
| H | H | H | H | H | H | $C_2H_5$ | H |
| H | H | H | H | H | H | $C_3H_7$ | H |
| H | H | H | H | H | H | i-$C_3H_7$ | H |
| H | H | H | $CH_3$ | $CH_3$ | H | $CH_3$ | H |
| H | H | H | $CH_3$ | $CH_3$ | H | $C_2H_5$ | H |
| H | H | H | $CH_3$ | $CH_3$ | H | $C_3H_7$ | H |
| H | H | H | $CH_3$ | $CH_3$ | H | i-$C_3H_7$ | H |

Als Verdünnungsmittel für die erfindungsgemäßen Verfahrensvarianten a), b) und c) sowie für die Herstellung der neuen Verbindungen der allgemeinen Formel (VII) kommen praktisch alle inerten organischen Verdünnungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether, wie Diethyl- und Dibutylether, Glykoldimethylether und Diglykoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B. Dimethylformamid, Dimethylacetamid und N-Methylpyrrolidon, sowie Dimethylsulfoxid, Tetramethylensulfon und Hexamethylphosphorsäuretriamid.

Die erfindungsgemäßen Verfahrensvarianten a), b) und c) [einschließlich Verfahren zur Herstellung der Verbindungen der allgemeinen Formel (VII)] werden im allgemeinen bei Temperaturen zwischen −50°C und 120°C durchgeführt. Bevorzugt wird der Bereich zwischen 0°C und 110°C. Die Umsetzungen werden im allgemeinen bei Normaldruck durchgeführt.

Die Verfahrensvarianten a), b) und c) einschließlich den Verfahren zur Herstellung der neuen Verbindungen der allgemeinen Formel (VII) werden gegebenenfalls in Gegenwart von Säureakzeptoren durchgeführt. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin und Pyridin. Soweit bei der Durchführung der erfindungsgemäßen Verfahrensvarianten keine Säuren entstehen, ist der Zusatz von Säureakzeptoren nicht erforderlich.

Zur Durchführung der erfindungsgemäßen Verfahrensvariante a) setzt man vorzugsweise auf ein Mol (Di)Thiophor(n)-säuredichlorid (Formel II) 1 bis 1,6 Mol, insbesondere 1 bis 1,4 Mol, der Verbindungen der allgemeinen Formel (III) ein.

Zur Durchführung der erfindungsgemäßen Verfahrensvariante b) setzt man vorzugsweise auf ein Mol Dithiophosphonsäureanhydrid der Formel (IV) 2 bis 3,2 Mol, insbesondere 2 bis 2,8 Mol, der Verbindungen der allgemeinen Formel (V) ein.

Zur Durchführung der erfindungsgemäßen Verfahrensvariante c) sowie zur Herstellung der Verbindungen der allgemeinen Formel (VII) setzt man vorzugsweise auf ein Mol Thiophosphorsäuretrichlorid 1 bis 1,6 Mol, insbesondere 1 bis 1,4 Mol, der Verbindungen der allgemeinen Formel (III) ein. Auf ein Mol der Verbindungen der allgemeinen Formel (VII) werden 1 bis 1,6 Mol, vorzugsweise 1 bis 1,4 Mol der Verbindungen der allgemeinen Formel (VIII) eingesetzt. Für den Fall, daß R für Amino, Alkylamino oder Methylalkylamino und M für Wasserstoff stehen, werden auf ein Mol der Verbindungen der allgemeinen Formel (VII) vorzugsweise 2 bis 3,2, insbesondere 2 bis 2,8 Mol der Verbindungen der allgemeinen Formel (VIII) verwendet.

Die Aufarbeitung erfolgt nach üblichen Methoden, beispielsweise durch Extraktion der Produkte mit Toluol oder Methylenchlorid aus der mit Wasser verdünnten Reaktionsmischung, Waschen der organischen Phase mit Wasser, Trocknen und Destillieren oder sogenanntes «Andestillieren», d.h. längeres Erhitzen unter vermindertem Druck auf mäßig erhöhte Temperaturen, um sie von den letzten flüchtigen Bestandteilen zu befreien, oder durch chromatographische Reinigung über Kieselgel. Zur Charakterisierung der Verbindungen dienen Brechungsindex, Schmelzpunkt, $R_f$-Wert, Siedepunkt oder die $^{31}P$-NMR-chemische Verschiebung.

Die Wirkstoffe eignen sich bei guter Pflanzenverträglichkeit und günstiger Warmblütertoxizität zur Bekämpfung von tierischen Schädlingen, vorzugsweise Arthropoden, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellino scaber.

Aus der Ordnung der Diplopoda z.B. Blaniulus guttulatus.

Aus der Ordnung der der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips labaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia aleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachtumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von unerwünschten Schädlingen, wie Insekten, Zecken und Milben auf dem Gebiet der Tierhaltung und Viehzucht, wobei durch die Bekämpfung der Schädlinge bessere Ergebnisse, z.B. höhere Milchleistungen, höheres Gewicht, schöneres Tierfell, längere Lebensdauer usw. erreicht werden können.

Die Anwendung der erfindungsgemäßen Wirkstoffe geschieht auf diesen Gebieten in bekannter Weise. wie durch äußerliche Anwendung in Form beispielsweise des Tauchens (Dippen), Sprühens (Sprayen) und Aufgießens (pour-on and spot-on).

Die Herstellung der erfindungsgemäßen Stoffe soll anhand der folgenden Beispiele näher erläutert werden.

*Beispiel 1*

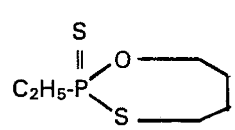

16,3 g (0,1 mol) Ethanthiophosphonsäuredichlorid werden in 1 l Toluol vorgelegt und langsam bei 20°C eine Mischung von 11 g (0,1 mol) 3-Mercaptobutanol-1 und 22 g (0,22 mol) Triethylamin in 100 ml Tetrahydrofuran zugetropft. Man erwärmt 2 Tage auf 80°C und gibt dann 200 ml Toluol und 200 ml Wasser zur Reaktionsmischung. Die organische Phase wird abgetrennt, mit Wasser gewaschen, getrocknet und zunächst im Wasserstrahlvakuum, dann im Hochvakuum das Lösungsmittel abdestilliert. Man erhält 11,5 g (59% der Theorie) 2-Ethyl-1,3,2-oxathiaphosphepan-2-sulfid mit einem Brechungsindex $n_D^{20}$ = 1,5761.

*Beispiel 2*

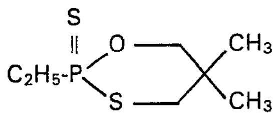

6,2 g (0,025 mol) Ethanthiophosphonsäuredithioanhydrid werden in 50 ml Toluol suspendiert und bei 50°C eine Lösung von 6,1 g (0,05 mol) 3-Chlor-2,2-dimethylpropanol in 20 ml Toluol zugetropft. Man rührt 2 h bei 20°C und tropft dann 5,6 g (0,055 mol) Triethylamin zum Reaktionsgemisch. Anschließend wird 2 Tage unter Rückfluß erhitzt, die Mischung nach Abkühlen mit 20 ml 2n Natronlauge versetzt, die organische Phase mit Wasser neutral gewaschen, getrocknet und erst unter Wasserstrahlvakuum, dann im Hochvakuum das Lösungsmittel abdestilliert. Man erhält 5,3 g (50% der Theorie) 2-Ethyl-5,5-dimethyl-1,3,2-oxathiaphosphorinan-2-sulfid mit einem Schmelzpunkt von 77 bis 79°C.

*Beispiel 3*

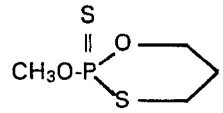

17 g (0,1 mol) Thiophosphorsäuretrichlorid werden in 1 l Toluol vorgelegt und bei 0°C innerhalb von 2 h eine Lösung von 24 g (0,24 mol) Triethylamin und 9,3 g (0,1 mol) 3-Mercaptopropanol in 200 ml Tetrahydrofuran zugetropft. Man erwärmt auf 20°C und rührt 1 Tag bei dieser Temperatur. Anschliessend wird die Reaktionsmischung mit Eiswasser extrahiert, die organische Phase getrocknet und im Wasserstrahlvakuum das Lösungsmittel abdestilliert. Zur weiteren Reinigung des Rohproduktes wird mit 3 l Laufmittel [Cyclohexan: Aceton (Volumenteile) = 10 : 1] über ca. 500 g Kieselgel filtriert. Man erhält 4,2 g nach Abdestillieren des Lösungsmittels 2-Chlor-1,3,2-oxathiaphosphorinan-2-sulfid mit dem Brechungsindex $n_D^{20}$ = 1,6178.

3,8 g (0,02 mol) dieses Chlorids werden in 50 ml Tetrahydrofuran gelöst und bei 0 bis 10°C mit einer Lösung von 1,1 g Natriummethanolat in 30 ml Methanol versetzt. Man rührt 10 Minuten, destilliert das Lösungsmittel im Wasserstrahlvakuum ab, nimmt mit Methylenchlorid auf, wäscht mit gesättigter Natriumchloridlösung, trocknet und filtriert über 300 g Kieselgel (3 l $CH_2Cl_2$-Lösung). Nach Abdestillieren des Lösungsmittels erhält man 2,6 g 2-Methoxy-1,3,2-oxathiaphosphorinan-2-sulfid mit einem Brechungsindex $n_D^{20}$ = 1,5744.

Analog den Beispielen 1 bis 3 werden erhalten:

| Beispiel Nr. | R | n | $R^1$ | $R^2$ | $R^3$ | $R^4$ | $R^5$ | $R^6$ | $R^7$ | $R^8$ | phys. Daten ($n_D^{20}$) |
|---|---|---|---|---|---|---|---|---|---|---|---|
| 4 | n-$C_3H_7$ | 1 | H | H | H | H | H | H | H | H | 1,570 |
| 5 | i-$C_3H_7$ | 1 | H | H | H | H | H | H | H | H | |
| 6 | $C_2H_5$ | 1 | $CH_3$ | H | H | H | H | H | H | H | 1,5570 |
| 7 | $C_2H_5$ | 0 | H | H | $CH_3$ | n-$C_3H_7$ | H | H | – | – | 1,5369 |
| 8 | $C_2H_5$ | 0 | H | H | n-$C_3H_7$ | $CH_3$ | H | H | – | – | 1,5327 |
| 9/10 | n-$C_3H_7$ | 0 | H | H | H | H | H | H | – | – | 1,5794 |
| 11 | $CH_3$ | 0 | H | H | H | H | H | H | – | – | Fp. 51-53°C |
| 12 | $CH_3NH$ | 0 | H | H | H | H | H | H | – | – | 1,482 |
| 13 | $(CH_3)_2N$ | 0 | H | H | H | H | H | H | – | – | 1,5809 |
| 14 | $C_2H_5$ | 0 | H | H | H | H (Isomer I) | H | $CH_3$ | – | – | 1,562 |
| 15* | $C_2H_5$ | 0 | H | H | $CH_3$ | n-$C_3H_7$ | H | H | – | – | 1,5332 |
| 16 | $CH_3$ | 0 | H | H | H | H (Isomer I) | H | $CH_3$ | – | – | Fp. 70-72°C |
| 17 | $C_2H_5$ | 0 | H | H | H | H | H | H | – | – | 1,5908 |
| 18 | $CH_3$ | 1 | H | H | H | H | H | H | H | H | 1,5932 |
| 19 | $CH_3$ | 0 | H | H | $CH_3$ | $CH_3$ | H | H | | | Fp. 66-68°C |
| 20/21/22 | $C_2H_5$ | 0 | H | H | $C_2H_5$ | $C_2H_5$ | H | H | | | 1,554 |
| 23 | $CH_3$ | 0 | H | H | $CH_3$ | n-$C_3H_7$ | H | H | | | 1,553 |
| 24 | $C_2H_5$ | 0 | H | i-$C_3H_7$ | $CH_3$ (Isomer I) | Ch3 | H | H | | | Fp. 99-100°C |
| 25 | $C_2H_5$ | 0 | H | i-$C_3H_7$ | $CH_3$ (Isomer II) | $CH_3$ | H | H | | | 1,5405 |
| 26 | $CH_3$ | 0 | H | i-$C_3H_7$ | $CH_3$ (Isomer I) | $CH_3$ | H | H | | | Fp. 114-116°C |

* Isomerengemisch

| Beispiel Nr. | R | n | $R^1$ | $R^2$ | $R^3$ | $R^4$ | $R^5$ | $R^6$ | $R^7$ | $R^8$ | phys. Daten ($n_D^{20}$) |
|---|---|---|---|---|---|---|---|---|---|---|---|
| 27 | $CH_3$ | 0 | H | i-$C_3H_7$ | $CH_3$ (Isomer II) | $CH_3$ | H | H | | | 1,5375 |
| 28 | $CH_3$ | 0 | H | n-$C_3H_7$ | H (Isomer I) | $C_2H_5$ | H | H | | | 1,542 |
| 29 | $CH_3$ | 0 | H | n-$C_3H_7$ | H (Isomer II) | $C_2H_5$ | H | H | | | 1,5505 |
| 30 | $C_2H_5$ | 0 | H | n-$C_3H_7$ | H (Isomer I) | $C_2H_5$ | H | H | | | 1,540 |
| 31 | $C_2H_5$ | 0 | H | n-$C_3H_7$ | H (Isomer II) | $C_2H_5$ | H | H | | | 1,5415 |
| 32 | $CH_3$ | 0 | H | H | i-$C_3H_7$ | H | H | H | | | 1,5656 |
| 33 | $CH_3$ | 0 | H | H | $C_2H_5$ | n-$C_4H_9$ | H | H | | | 1,542 |
| 34 | $CH_3$ | 1 | H | $CH_3$ | H | H | H | H | H | H | 1,568 |
| 35 | $CH_3$ | 0 | H | $CH_3$ | H | H | H | H | | | 1,579 |
| 36 | $CH_3NH$ | 0 | H | H | H | H | $CH_3$ | H | | | Fp. 64-65°C |
| 37 | $C_2H_5$ | 0 | H | H | H | H (Isomer II) | $CH_3$ | H | | | 1,572 |
| 38 | $CH_3$ | 0 | H | H | H | H (Isomer I) | n-$C_3H_7$ | H | | | 1,561 |
| 39 | $CH_3$ | 0 | H | H | H | H (Isomer II) | n-$C_3H_7$ | H | | | 1,5565 |
| 40 | $C_2H_5$ | 0 | H | H | H | H (Isomer I) | n-$C_3H_7$ | H | | | 1,5465 |
| 41 | $C_2H_5$ | 0 | H | H | H | H (Isomer II) | n-$C_3H_7$ | H | | | 1,5565 |
| 42 | $CH_3O$ | 0 | H | H | H | H | n-$C_3H_7$ | H | | | |
| 43 | $CH_3$ | 0 | H | H | $CH_3$ | H | $CH_3$ | H | | | |
| 44 | $CH_3$ | 0 | H | H | H | H (Isomer I) | n-$C_4H_9$ | H | | | 1,5385 |
| 45 | $CH_3$ | 0 | H | H | H | H (Isomer II) | n-$C_4H_9$ | H | | | 1,5520 |
| 46 | $CH_3$ | 0 | H | H | H | H | $CH_3$ | $CH_3$ | | | |
| 47 | $C_2H_5$ | 0 | H | H | H | H | $CH_3$ | $CH_3$ | | | 1,5585 |
| 48 | $CH_3$ | 0 | H | H | H | H | $C_2H_5$ | H | | | |
| 49 | $CH_3$ | 0 | H | H | H | H (Isomer II) | $CH_3$ | H | | | Fp. 63-65°C |
| 50 | $CH_3$ | 0 | H | H | $C_2H_5$ | $C_2H_5$ | H | H | | | Fp. 53-55°C |

Entsprechend Teil 1 aus Beispiel 3 wird die folgende Verbindung der Formel VII erhalten:

| n | $R^1$ | $R^2$ | $R^3$ | $R^4$ | $R^5$ | $R^6$ | $R^7$ | $R^8$ | $n_D^{20}$ |
|---|---|---|---|---|---|---|---|---|---|
| 0 | H | H | H | H | n-$C_3H_7$ | H | | | 1,5755 |

Die biologische Wirksamkeit der neuen Verbindungen der allgemeinen Formel (I) soll anhand der folgenden Beispiele erläutert werden. Bei einigen Tests wurde die aus der DE-PS 1 104 520 bekannte Verbindung der Formel

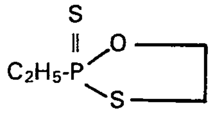

(A)

eingesetzt.

*Beispiel A*

$LD_{100}$-Test

Testtiere: Leucophaea maderae
Zahl der Testtiere: 5
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro m Filterpapier verschieden hoch. Anschliessend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100%, daß alle Testtiere abgetötet wurden; 0% bedeutet, daß keine Testtiere abgetötet wurden.

Bei diesem Test zeigten z.B. bei einer Wirkstoffkonzentration von 0,2% die Verbindungen der Herstellungsbeispiele 1, 2 und 3 eine Abtötung von 100%.

*Beispiel B*

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie bei der unbehandelten Kontrolle.

Bei diesem Test zeigten z.B. bei einer Wirkstoffkonzentration von 20 ppm die Verbindungen der Herstellungsbeispiele 1, 2, 3, 4, 6, 7, 8, 9, 11, 12, 15 und 17 eine Abtötung von 100%, während die Vergleichsverbindung (A) bei der gleichen Konzentration keine Abtötung (0%) ergab.

*Beispiel C*

Grenzkonzentrations-Test / Bodeninsekten

Testinsekt: Diabrotica balteata-Larven (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie bei der unbehandelten Kontrolle.

Bei diesem Test zeigten z.B. bei einer Wirkstoffkonzentration von 20 ppm die Verbindungen der Herstellungsbeispiele 1, 2, 3, 4, 6, 7, 8, 9, 11, 12, 15 und 17 eine Abtötung von 100%, während die Vergleichsverbindung (A) bei der gleichen Konzentration keine Abtötung (0%) ergab.

*Beispiel D*

$LT_{100}$-Test für Dipteren

Testtiere: Musca domestica
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro m Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100%igen knock down-Effekt ($LT_{100}$) notwendig ist.

Bei diesem Test wurde bei einer beispielhaften Wirkstoffkonzentration von 0,002% mit den Verbindungen aus den Herstellungsbeispielen 1, 3, 4, 6, 9, 11, 14, 15 und 16 der $LT_{100}$ nach spätestens 360 Minuten erreicht, während bei der Vergleichsverbindung (A) bei der gleichen Konzentration die $LT_{100}$ nach 360' nicht erreicht wurde (0%).

*Beispiel E*

Test mit Lucilia cuprina resistent-Larven

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei disem Test zeigten z.B. bei einer Wirkstoffkonzentration von 300 ppm die Verbindungen aus den Herstellungsbeispielen 1, 4, 11, 15 und 17 einen Abtötungsgrad von 100%.

*Beispiel F*

$LD_{100}$-Test

Testtiere: Sitophulus granarius
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro m Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100%, daß alle Testtiere abgetötet wurden; 0% bedeutet, daß keine Testtiere abgetötet wurden.

Bei diesem Test zeigten z.B. bei einer Konzentration von 0,02 die Verbindungsbeispiele 4, 14, 15 und 16 eine Abtötung von 100%, während die Vergleichsverbindung (A) bei der gleichen Konzentration nur eine Abtötung von 60% ergab.

*Beispiel G*

Lephygma-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Laphygma frugiperda) besetzt, solange die Blätter noch feucht sind.

Nach der gewünschten Zeit wird die Abtötung in % bestimmt. Dabei bedeutet 100%, daß alle Raupen abgelötet wurden; 0% bedeutet, daß keine Raupen abgetötet wurden.

Bei diesem Test zeigten z.B. die Verbindungen der Herstellungsbeispiele 1, 3, 4, 7, 11, 12, 14 und 15 bei einer Wirkstoffkonzentration von 0,01% eine Abtötung von 100%, während die Vergleichsverbindung (A) bei der gleichen Konzentration keine Abtötung (0%) ergab.

*Beispiel H*
Doralis-Test (systemische Wirkung)

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit je 20 ml Wirkstoffzubereitung der gewünschten Konzentration werden Bohnenpflanzen (Vicia faba), die stark von der schwarzen Bohnenlaus (Doralis fabae) befallen sind, angegossen, so daß die Wirkstoffzubereitung in den Boden eindringt, ohne den Sproß zu benetzen. Der Wirkstoff wird von den Wurzeln aufgenommen und in den Sproß weitergeleitet.

Nach der gewünschten Zeit wird die Abtötung in % bestimmt. Dabei bedeutet 100%, dass alle Blattläuse abgetötet wurden; 0% bedeutet, daß keine Blattläuse abgetötet wurden.

Bei diesem Test zeigten z.B. die Verbindungen der Herstellungsbeispiele 3, 11, 12 und 17 bei einer Wirkstoffkonzentration von 0,01% eine Abtötung von 10%, während die Vergleichsverbindung (A) bei der gleichen Konzentration keine Abtötung (0%) ergab.

*Beispiel J*

Grenzkonzentrations-Test / Wurzelsystemische Wirkung

Testinsekt: Phaedon cochleariae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigen z.B. die Verbindungen der Herstellungsbeispiele 1, 12 und 17 bei einer Wirkstoffkonzentration von 20 ppm eine Wirkung von 100%, während die Vergleichsverbindung (A) bei der gleichen Konzentration keine Abtötung (0%) ergab.

*Beispiel K*

Grenzkonzentrations-Test / Wurzelsystemische Wirkung

Testinsekt: Myzus persicae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt·die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigten z.B. die Verbindungen der Herstellungsbeispiele 1, 9, 12, 13 und 17 bei einer Wirkstoffkonzentration von 20 ppm eine Abtötung von 100%, während die Vergleichsverbindung (A) bei der gleichen Konzentration keine Abtötung (0%) ergab.

*Beispiel L*

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln aif Nematodenbefall (Wurzelgallen) untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigten z.B. bei einer Wirkstoffkonzentration von 20 ppm die Verbindungen der Herstellungsbeispiele 1, 4, 6, 7, 8, 9, 15 und 17 einen Wirkungsgrad von 100%, während die Vergleichsverbindung (A) bei der gleichen Konzentration einen Wirkungsgrad von 0% ergab.

*Beispiel M*

Grenzkonzentrations-Test / Nematoden

Testnematode: Globodera rostochiensis
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18°C.

Nach sechs Wochen werden die Kartoffelwurzeln auf Zysten untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigten z.B. die Verbindungen der Herstellungsbeispiele 1 und 17 bei einer Wirkstoffkonzentration von 20 ppm einen Wirkungsgrad von 100%, während die Vergleichsverbindung (A) bei der gleichen Konzentration einen Wirkungsgrad von 0% ergab.

**Patentansprüche**

1. Phosphor enthaltende Heterocyclen der allgemeinen Formel (I)

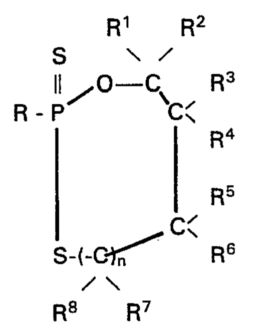

(I)

in welcher

R für $C_1$-$C_4$-Alkyl, $C_1$-$C_6$-Alkoxy, $C_1$-$C_4$-Alkylamino oder Methyl-($C_1$-$C_4$-alkyl)-amino steht,

$R^1$ bis $R^8$ gleich oder verschieden sind und für Wasserstoff oder gegebenenfalls durch Chlor oder Brom substituiertes $C_1$-$C_4$-Alkyl stehen und

n für null oder eins steht.

2. Verfahren zur Herstellung von Phosphor enthaltenden Heterocyclen der allgemeinen Formel (I)

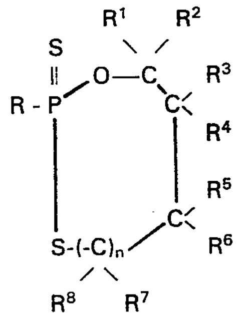

(I)

in welcher

$R^1$-$R^8$ und n die in Anspruch 1 genannten Bedeutungen haben,

dadurch gekennzeichnet, daß man

a) Halogenide der allgemeinen Formel (II)

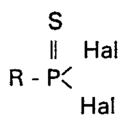

(II)

in welcher

Hal für Halogen, vorzugsweise für Chlor oder Brom, insbesondere für Chlor steht und

R die oben angegebene Bedeutung hat,

mit Verbindungen der allgemeinen Formel (III)

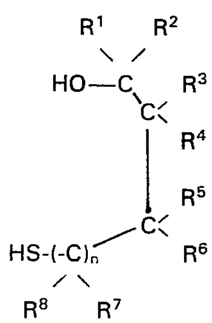

(III)

in welcher

$R^1$ bis $R^8$ und n die obengenannte Bedeutung haben,

gegebenenfalls in Gegenwart eines Säureakzeptors und gegebenenfalls in Gegenwart von Verdünnungsmitteln umsetzt oder

b) Dithioanhydride der allgemeinen Formel (IV)

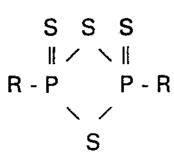

(IV)

in welcher

R für gegebenenfalls substituiertes Alkyl steht,

mit Alkoholen der allgemeinen Formel (V)

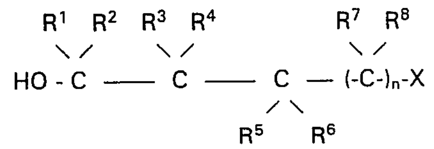

(V)

in welcher

$R^1$ bis $R^8$ und n die obengenannte Bedeutung haben und

X für Halogen steht oder für einen Sulfonatrest der allgemeinen Formel (VI)

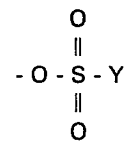

(VI)

steht, in welcher

Y für gegebenenfalls substituiertes Alkyl oder Aryl steht,

gegebenenfalls unter Verwendung eines Verdünnungsmittels und gegebenenfalls unter Zugabe eines Säureakzeptors, umsetzt oder

c) zunächst [analog Methode a)] Thiophosphorsäuretrichlorid ($PSCl_3$) mit Verbindungen der allgemeinen Formel (III) zu 2-Chlor-1,3,2-oxathia-P-cyclen der allgemeinen Formel (VII)

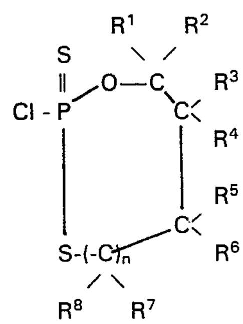

(VII)

in welcher

$R^1$ bis $R^8$ und n die obengenannte Bedeutung haben, umsetzt und, gegebenenfalls nach ihrer Isolierung, dann in einem zweiten Reaktionsschritt mit einer Verbindung der allgemeinen Formel (VIII)

R - M (VIII)

in welcher

R die obengenannte Bedeutung, ausgenommen gegebenenfalls substituiertes Alkyl, hat, und

M für Wasserstoff, ein Äquivalent eines Alkali- oder Erdalkalimetallions (wie Natrium, Kalium oder Calcium) oder für ein Ammoniumion steht,

gegebenenfalls in Gegenwart von Säureakzeptoren und gegebenenfalls in Gegenwart von Verdünnungsmitteln umsetzt.

3. Schädlingsbekämpfungsmittel, gekennzeichnet durch einen Gehalt an mindestens einer Verbindung der allgemeinen Formel (I) gemäß Anspruch 1 oder 2.

4. Verwendung von Verbindungen der allgemeinen Formel (I) gemäß Anspruch 1 oder 3 zur Bekämpfung von Schädlingen, vorzugsweise Arthropoden, insbesondere Insekten und Spinnentieren sowie Nematoden.

5. Verfahren zur Bekämpfung von Schädlingen, dadurch gekennzeichnet, daß man Verbindungen der allgemeinen Formel (I) gemäß Anspruch 1 oder 3 auf Schädlinge, vorzugsweise Arthropoden, insbesondere Insekten oder Spinnentiere sowie Nematoden oder ihren Lebensraum einwirken läßt.

6. Verfahren zur Herstellung von Schädlingsbekämpfungsmitteln, dadurch gekennzeichnet, daß man Verbindungen der allgemeinen Formel (I) gemäß Anspruch 1 oder 5 mit Streckmitteln und/oder oberflächenaktiven Mitteln vermischt.

**Claims**

1. Phosphorus-containing heterocycles of the general formula (I)

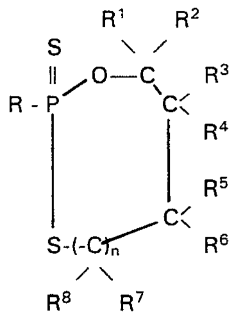

(I)

in which

R represents $C_1$-$C_4$-alkyl, $C_1$-$C_6$-alkoxy, $C_1$-$C_4$-alkylamino or methyl-($C_1$-$C_4$-alkyl)-amino,

$R^1$ to $R^8$ are identical or different and represent hydrogen or optionally chlorine- or bromine-substituted $C_1$-$C_4$-alkyl, and

n represents zero or one.

2. Process for the preparation of phosphorus-containing heterocycles of the general formula (I)

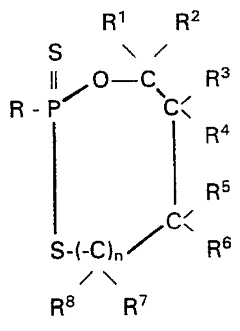

(I)

in which

$R^1$-$R^8$ and n have the meanings mentioned in claim 1, characterized in that

a) halides of the general formula (II)

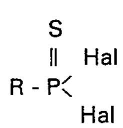

(II)

in which

Hal represents halogen, preferably, chlorine or bromine, in particular chlorine, and

R has the abovementioned meaning,

are reacted with compounds of the general formula (III)

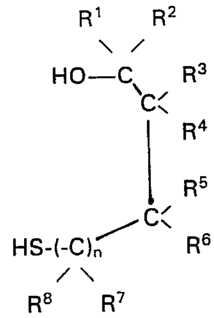

(III)

in which

$R^1$ to $R^8$ and n have the abovementioned meaning,

if appropriate in the presence of an acid acceptor and, if appropriate, in the presence of diluents, or

b) dithioanhydrides of the general formula (IV)

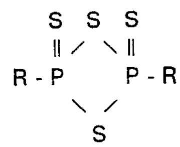

(IV)

in which

R represents optionally substituted alkyl,

are reacted with alcohols of the general formula (V)

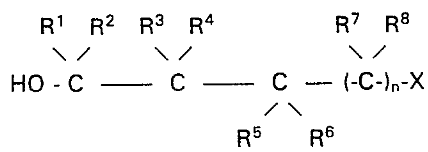

(V)

in which

$R^1$ to $R^8$ and n have the abovementioned meaning and

X represents halogen, or represents a sulphonate radical of the general formula (VI)

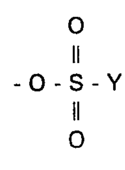

(VI)

in which

Y represents optionally substituted alkyl or aryl, if appropriate using a diluent and if, appropriate, with the addition of an acid acceptor, or

c) first [analogously to method a)] thiophosphoryl trichloride ($PSCl_3$) is reacted with compounds of the general formula (III) to give 2-chloro-1,3,2-oxathia-p-cycles of general formula (VII)

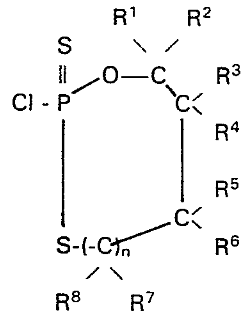

(VII)

in which

$R^1$ to $R^8$ and n have the abovementioned meaning, and, if appropriate after they have been isolated, these compounds are then reacted, in a second reaction step, with a compound of the general formula (VIII)

R - M (VIII)

in which

R has the abovementioned meaning, with the exception of optionally substituted alkyl, and

M represents hydrogen, or one equivalent of an alkali metal or alkaline earth metal ion (such as sodium, potassium or calcium) or an ammonium ion,

if appropriate in the presence of acid acceptors and, if appropriate, in the presence of diluents.

3. Pest-combating agents, characterized in that they contain at least one compound of the general formula (I) according to claim 1 or 2.

4. Use of compounds of the general formula (I) according to claim 1 or 3 for combating pests, preferably arthropods, in particular insects and arachnida, as well as nematodes.

5. Method for combating pests, characterized in that compounds of the general formula (I) according to claim 1 or 3 are allowed to act on pests, preferably arthropods, in particular insects or arachnida, as well as nematodes or their habitat.

6. Process for the preparation of pest-combating agents, characterized in that compounds of the general formula (I) according to claim 1 or 5 are mixed with extenders and/or surface-active agents.

**Revendications**

1. Composés hétérocycliques contenant du phosphore de formule générale (I)

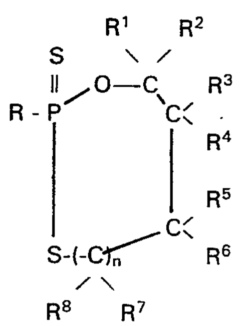

(I)

dans laquelle

R représente un alkyle en $C_1$-$C_4$, un alcoxy en $C_1$-$C_6$, un alkylamino en $C_1$-$C_4$ ou un méthyl-(alkyl en $C_1$-$C_4$)-amino,

$R^1$ à $R^8$ sont identiques ou différents et représentent l'hydrogène ou un alkyle en $C_1$-$C_4$ éventuellement substitué par du chlore ou du brome et

n représente zéro ou un.

2. Procédé de fabrication de composés hétérocycliques contenant du phosphore de formule générale (I)

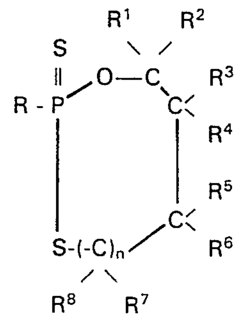

(I)

dans laquelle

$R^1$ à $R^8$ et n ont les significations décrites dans la revendication 1,

caractérisé en ce qu'on fait réagir

a) des halogénures de formule générale (II)

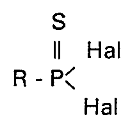

(II)

dans laquelle

Hal représente un halogène, de préférence le chlore ou le brome, en particulier le chlore

R a les significations décrites ci-dessus

avec des composés de formule générale (III)

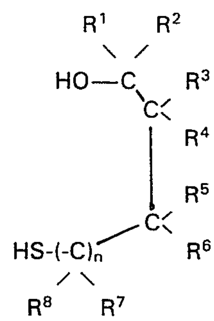

(III)

dans laquelle

$R^1$ à $R^8$ et n ont les significations décrites ci-dessus, éventuellement en présence d'un accepteur d'acide et éventuellement en présence de diluants, ou

b) des dithioanhydrides de formule générale (IV)

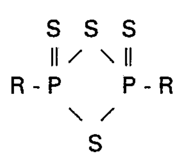

(IV)

dans laquelle

R représente un alkyle éventuellement substitué, avec des alcools de formule générale (V)

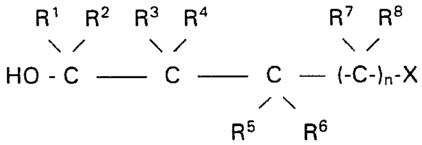

(V)

dans laquelle
$R^1$ à $R^8$ et n ont les significations décrites ci-dessus et X représente un halogène ou un reste de sulfonate de formule générale (VI)

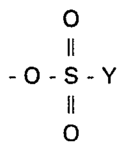

(VI)

dans laquelle
Y représente un alkyle ou un aryle éventuellement substitué,
éventuellement en utilisant un diluant et éventuellement sous addition d'un accepteur d'acide, ou

c) d'abord [de matière analogue à un diluant a)] du trichlorure d'acide thiophosphorique ($PSCl_3$) avec des composés de formule générale (III) pour obtenir des composés 2-chloro-1,3,2-oxathia-P-cycliques de formule générale (VII)

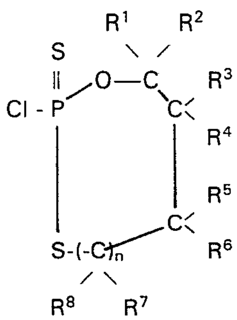

(VII)

dans laquelle
$R^1$ à $R^8$ et n ont les significations décrites ci-dessus et, éventuellement après leur isolement, et on fait réagir ces composés, dans une seconde phase de réaction, avec un composé de formule générale (VIII)

$$R - M \qquad (VIII)$$

dans laquelle
R a les significations décrites ci-dessus, excepté un alkyle éventuellement substitué, et
M représente l'hydrogène, un équivalent d'un ion de métal alcalin ou de métal alcalino-terreux (comme le sodium, le potassium ou le calcium) ou un ion d'ammonium, éventuellement en présence d'accepteurs d'acide et éventuellement en présence de diluants.

3. Agents de lutte contre les parasites, caractérisés en ce qu'ils contiennent au moins un composé de formule générale (I) selon la revendication 1 ou 2.

4. Utilisation de composés de formule générale (I) selon la revendication 1 ou 3 pour lutter contre les parasites, de préférence les arthropodes, en particulier les insectes et les arachnides ainsi que les nématodes.

5. Procédé de lutte contre les parasites, caractérisé en ce qu'on fait agir des composés de formule générale (I) selon la revendication 1 ou 3 sur les parasites, de préférence les arthropodes, en particulier les insectes ou les arachnides ainsi que les nématodes ou sur leur environnement.

6. Procédé de fabrication d'agents de lutte contre les parasites, caractérisé en ce qu'on mélange les composés de formule générale (I) selon la revendication 1 ou 5 avec des diluants et/ou des agents tensioactifs.